# EUROPEAN PATENT APPLICATION

(11) **EP 1 385 288 A2**
(43) Date of publication of application: **28.01.2004**
(21) Application number: 03004843.3
(22) Date of filing: 05.03.2003
(51) Int. Cl.: H04J 14/02

(54) **Interleaver-based multiplexer and demultiplexer**

(30) Priority: 26.07.2002 US 206450
(71) Applicant: Agilent Technologies Inc, Palo Alto, CA 94306-2024 (US)
(72) Inventor: Lacey, Jonathan P., Mountain View, California 94041-1318 (US); Lemoff, Brian E., Union City, California 94587 (US); Trutna, William R., Jr., Atherton, California 94027 (US); Rankin, Glenn H., Menlo Park, California 94025 (US); Zhao, Peter P., Palo Alto, CA 94306 (US); Wildnauer, Kenneth R., Santa Rosa, California 95404 (US)
(74) Representative: Schoppe, Fritz, Dipl.-Ing.

(57) **Abstract**

A demultiplexer system (50) having an interleaver (32) for dividing the incoming wavelength-division multiplexed (WDM) signal (31) into interleaved WDM signals and a single demultiplexing device (42) for demultiplexing the de-interleaved WDM signals into single-channel signals is disclosed. Because a single demultiplexing device (42) is used, size and cost savings can be realized.

## Description

### BACKGROUND

The present invention relates to optical communication devices. More specifically, the present invention relates to optical multiplexer and demultiplexer.

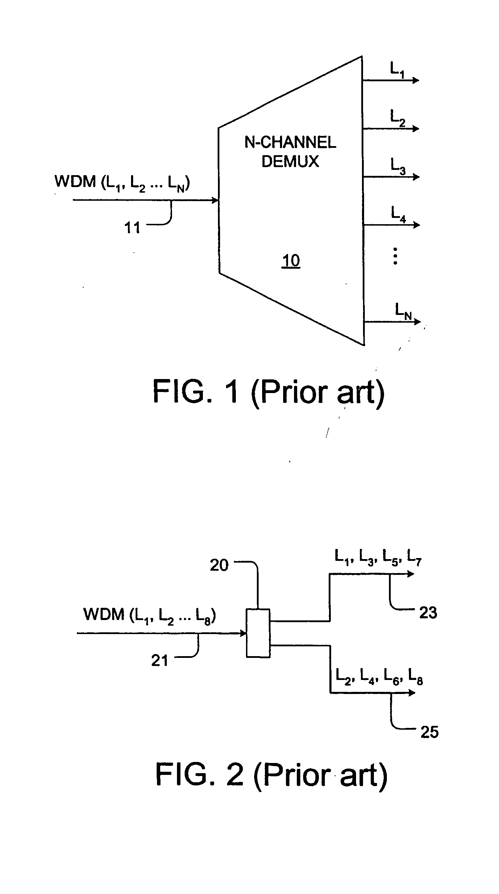

A wavelength demultiplexer 10, illustrated in Figure 1, is a device with one input port and N output ports, N being a number greater than one. The input port receives, from an input fiber (transmission medium) an N-channel wavelength-division multiplexed (WDM) signal 11. That is, the input WDM signal 11 includes N different channels, each channel modulated onto an optical carrier with a different wavelength. For convenience, each channel is represented as Lᵢ where i ranges from 1 to N. For example, N can be eight, in which case the demultiplexer 10 is referred to as an 8-channel demultiplexer.

The channels of a WDM signal are spaced in frequency, and the channel spacing is designated, for convenience, as D. The demultiplexer 10 directs each of the N channels (wavelengths) to a different output port, thus separating, or demultiplexing, the input channels.

A wavelength multiplexer (not illustrated) performs the reverse operation. That is, a multiplexer combines N channels onto a single WDM signal. For simplicity, this document discusses demultiplexers; however, it is understood that the following discussions also apply to multiplexers.

The demultiplexer 10 is described as an N-channel device because it can demultiplex (separate) a WDM signal having N channels with wavelength spacing D between the channels. Properties (for example, cost, size, and optical loss) of demultiplexers often scale strongly with number of channels and spacing requirement. That is, a multiplexer having larger number of channels or requiring demultiplexing of closely spaced channels require more real estate (larger size), has higher cost, and introduces more signal loss than a multiplexer having relatively smaller number of channels, greater spacing between channels, or both.

To improve the Properties of a demultiplexing system, interleavers are often used reduce the channel-number requirements and tight-spacing requirements of demultiplexers. An interleaver 20 of Figure 2 is a three-port wavelength-separation device that divides a single input WDM signal 21 into two de-interleaved WDM signals 23 and 25, first de-interleaved output signal 23 having the odd channels of the input WDM signal 21 and the second de-interleaved output signal 25 having the even channels of the input WDM signal 21. For instance, if the input WDM signal 21 includes channels L₁ through L₈, inclusive, then the first de-interleaved output signal 23 is a WDM signal including the odd channels L₁, L₃, L₅, and L₇, and the second de-interleaved output signal 25 is a WDM signal including the even channels L₂, L₄, L₆, and L₈. It is possible to make compact, low-loss interleavers at relatively low cost. For example, one embodiment of an interleaver is described in B. N. Dingel and T. Aruga, "Properties of a novel, noncascaded-type easy-to-design, ripple-free optical bandpass filter," IEEE Journal of Lightwave Technology, Vol. 7, No. 8, August 1999, pp. 1461-1469.

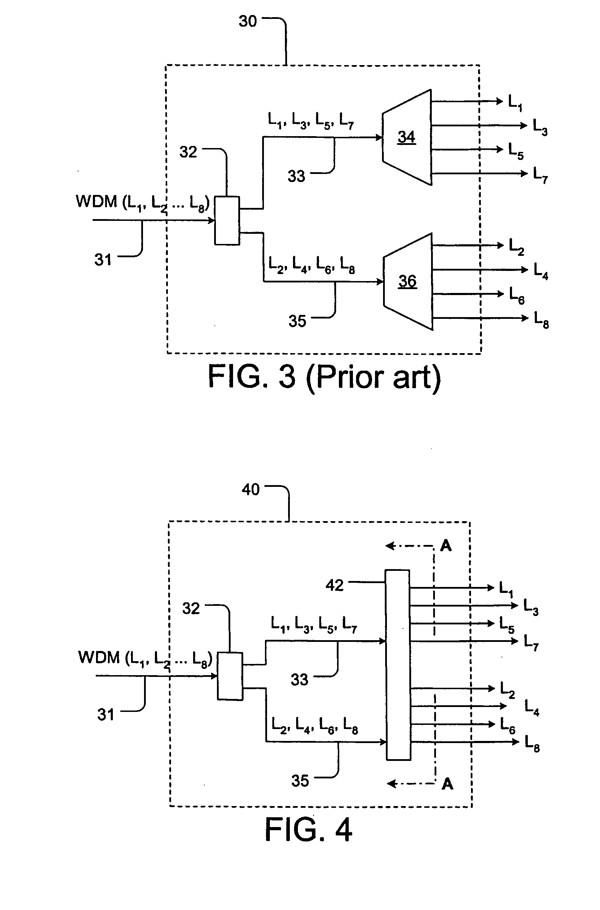

One technique to build a wavelength demultiplexing system for large N, small D, or a combination of large N and small D is to use one or more stages of interleavers followed by demultiplexers as shown in Figure 3. In Figure 3, a demultiplexer system 30 is illustrated. An interleaver 30 divides an input WDM signal 31 having 8 channels with a first channel spacing D₁ into two 4-channel WDM signals 33 and 35 each having four channels with spacing D₂ where D₂ is twice that of D₁. As illustrated, each of the 4-channel WDM signals 33 and 35 are demultiplexed by one of the 4-channel demultiplexers 34 and 36, respectively.

Here, the number of channels of the input signals (the 4-channel WDM signals 33 and 35) for each of the 4-channel demultiplexers 34 and 36 are relatively small compared to the number of channels of the WDM input signal 31 (or input signal 11 for the 8-channel demultiplexer 10 of Figure 1). Moreover, the spacing D₂ between the channels of the input signals (the 4-channel WDM signals 33 and 35) is wider than the spacing D₁ of the input WDM 8-channel signal 31 (or input signal 11 of Figure 1). For these reasons, the demultiplexer system 30 can be fabricated having more desirable properties than the properties of the demultiplexer 10 of Figure 1.

However, there is a continuing demand and need for even better demultiplexer systems having even more desirable properties, for example, smaller size requirement.

### SUMMARY

The need is met by the present invention. According to a first aspect of the present invention, a demultiplexer system includes an interleaver for dividing an input multiplexed signal (having a plurality of channels) into two de-interleaved multiplexed signals (each de-interleaved multiplexed signal having a subset of the channels of the input signal). A single demultiplexing device separates both of the de-interleaved multiplexed signals into single-channel output signals.

According to a second aspect of the present invention, a method for demultiplexing an N-channel multiplexed signal is disclosed. First, the N-channel multiplexed signal is divided into two M-channel multiplexed signals where M is one half of M. Then, both of the M-channel signals are separated into single-channel output signals using a single demultiplexing device.

According to a third aspect of the present invention, a demultiplexer system includes a first-stage interleaver dividing an input multiplexed signal (having a plurality of channels) into two de-interleaved multiplexed signals. Then, each of two second-stage interleavers divides one of the de-interleaved multiplexed signals into two twice-de-interleaved multiplexed signals. Finally, a single demultiplexing device demultiplexes the twice-de-interleaved multiplexed signals into single-channel output signals.

According to a third aspect of the present invention, a demultiplexer system includes a first-stage interleaver dividing an input multiplexed signal (having a plurality of channels) into two de-interleaved multiplexed signals. Then, each of two second-stage interleavers divides one of the de-interleaved multiplexed signals into two twice-de-interleaved multiplexed signals. Finally, a single demultiplexing device demultiplexes the twice-de-interleaved multiplexed signals into single-channel output signals.

According to a fourth aspect of the present invention, a multiplexer system includes a single multiplexing device for multiplexing a first set of single-channel signals into a first multiplexed signal and a second set of singled-channel signals into a second multiplexed signal. An interleaver combines the first multiplexed signal and the second multiplexed signal into a third multiplexed signal.

Other aspects and advantages of the present invention will become apparent from the following detailed description, taken in combination with the accompanying drawings, illustrating by way of example the principles of the invention.

### BRIEF DESCRIPTION OF THE DRAWINGS

Figure 1 is a diagram of an N-channel demultiplexer;
Figure 2 is a diagram of an interleaver;
Figure 3 is a diagram of an 8-channel demultiplexer system;
Figure 4 is a diagram of an 8-channel demultiplexer system according to one'embodiment of the present invention;
Figure 5 is a side view of a single demultiplexing device of Figure 4;
Figure 6 is a diagram of an 16-channel demultiplexer system according to one embodiment of the present invention; and
Figure 7 is a diagram of an 8-channel multiplexer system according to one embodiment of the present invention.

### DETAILED DESCRIPTION

As shown in the drawings for purposes of illustration, the present invention is embodied in apparatus and techniques for fabricating demultiplexer ad multiplexer systems while minimizing the number and coost of the required components.

Figure 4 is a diagram of an 8-channel demultiplexer system 40 according to one embodiment of the present invention. Portions of the system 40 are similar to portions of the demultiplexer system 30 of Figure 3. For convenience, components in Figure 4 that are similar to components in Figure 3 are assigned the same reference numerals and different components are assigned different reference numerals.

The system 40 includes an interleaver 32 for dividing an input multiplexed signal 31 having a plurality of channels into two de-interleaved multiplexed signals 33 and 35, each de-interleaved multiplexed signal 33 and 35 having a subset of said plurality of channels. In the illustrated example, the input signal is an 8-channel WDM signal having channels L1 through L8. It is divided into the first de-interleaved multiplexed signal 33 having the odd channels (four channels) including channels L₁, L₃, L₅, and L₇ and the second de-interleaved multiplexed signal 35 having the even channels (four channels) including channels L₂, L₄, L₆, and L₈. Typically, the number of channels of the de-interleaved signal, referable as M, is half of the number of channels of the input signal 31.

Both of the de-interleaved multiplexed signals 33 and 35 are demultiplexed using a single demultiplexing device 42. The device 42 separates both de-interleaved multiplexed signals 33 and 35 into single-channel output signals. In the demultiplexer system 40, the single demultiplexing device 42 replaces two demultiplexers 34 and 36 of system 30 of Figure 3.

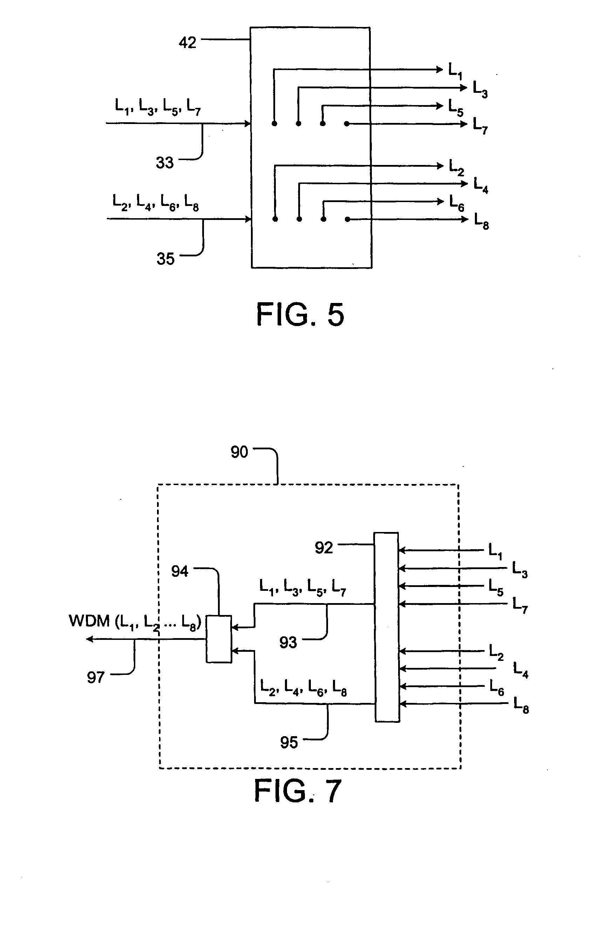

Figure 5 is a side view of a single demultiplexing device 42 of Figure 4 as viewed from line A--A of Figure 4. As illustrated, the device 42 is implemented using such devices as an Offner spectrograph. The device 42 can be considered as a stacked demultiplexer where its inputs are a one-dimensional array (a vertical column) of multiplexed signals such as signals 33 and 35 and its output is a two-dimensional array of demultiplexed, single-channel signals.

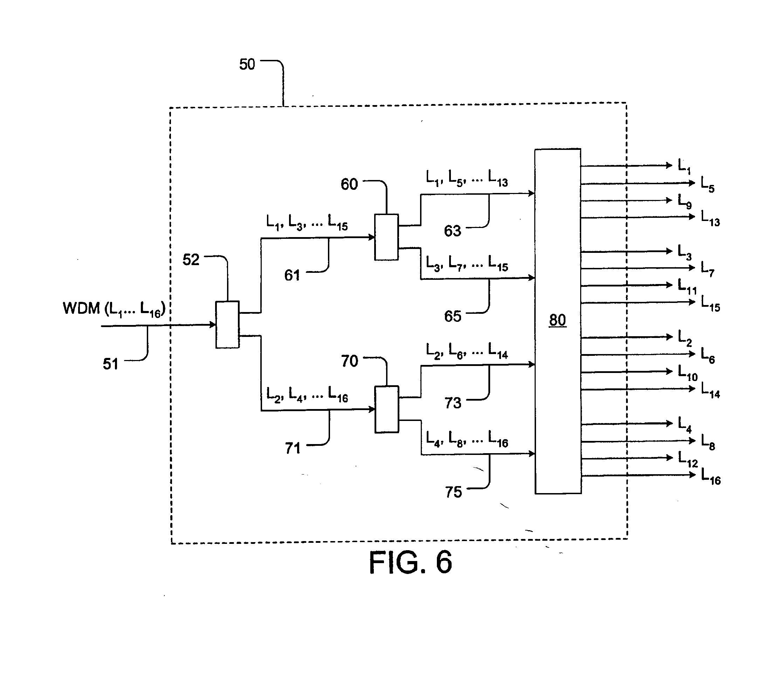

Figure 6 is a diagram of a 16-channel demultiplexer system 50 according to another embodiment of the present invention. Referring to Figure 6, input 16-channel WDM signal 51 having wavelength spacing D₃ is demultiplexed by the system 50. The input signal 51 is divided into two de-interleaved multiplexed signals 61 and 71 by a first-stage interleaver 52. Each of the de-interleaved multiplexed signals 61 and 71 are 8-channel WDM signals having channel spacing of D₄ where D₄ is twice the value of D₃.

A first second-stage interleaver 60 divides the first de-interleaved multiplexed signal 61 into two twice-de-interleaved multiplexed signals 63 and 65. Each of the twice-de-interleaved multiplexed signals 63 and 65 are 4-channel WDM signals having channel spacing of D₅ that is twice the value of D₄.

Likewise, a second second-stage interleaver 70 divides the second de-interleaved multiplexed signal 71 into two twice-de-interleaved multiplexed signals 73 and 75. Each of the twice-de-interleaved multiplexed signals 73 and 75 are 4-channel WDM signals having channel spacing of D₅ that is twice the value of D₄.

A single demultiplexing device 80 demultiplexes all four twice-de-interleaved multiplexed signals 63, 65, 73, and 75 into single-channel output signals. Again, the device 80 is, for example, an Offner spectrograph.

In the above sample embodiments, the present invention is discussed in the context of demultiplexing systems. However, the present invention and techniques are applicable in other context such as a multiplexer. In Figure 7, a multiplexer system 90 is illustrated. In the system 90, a single multiplexing device 92 multiplexes a first set of single-channel signals L₁, L₃, L₅, and L₇ into a first multiplexed signal 93. The same multiplexing device 92 multiplexes a second set of single-channel signals L₂, L₄, L₆, and L₈ into a second multiplexed signal 95. The multiplexed signals 93 and 95 are combined by an interleaver 94 into a third multiplexed signal 97 having all eight channels L₁, L₂, ... L₈.

From the foregoing, it will be appreciated that the present invention is novel and offers advantages over the current art. Although a specific embodiment of the invention is described and illustrated above, the invention is not to be limited to the specific forms or arrangements of parts so described and illustrated. For example, differing configurations, sizes, or materials may be used to practice the present invention. The invention is limited by the claims that follow.

## Claims

1. A demultiplexer system (40) comprising:
an interleaver (32) for dividing an input multiplexed signal (31) having a plurality of channels into two de-interleaved multiplexed signals (33, 35), each de-interleaved multiplexed signal having a subset of said plurality of channels; and
a single demultiplexing device (42) for separating both said de-interleaved multiplexed signals (33, 35) into single-channel output signals.

2. The demultiplexer system (40) recited in claim 1 wherein the single demultiplexing device (42) is an Offner spectrograph.

3. A method for demultiplexing an N-channel multiplexed signal, the method comprising:
dividing the N-channel multiplexed signal (31) into two M-channel multiplexed signals (33, 35) where M is one half of M; and
separating both of said M-channel signals (33, 35) into single-channel output signals using a single demultiplexing device (42).

4. The demultiplexer method recited in claim 3 wherein the single demultiplexing device (42) is an Offner spectrograph.

5. A demultiplexer system (50) comprising:
a first-stage interleaver (52) dividing an input multiplexed signal (51) having a plurality of channels into two de-interleaved multiplexed signals (61, 71),
two second-stage interleavers (60, 70), each second-stage interleaver dividing one of said de-interleaved multiplexed signals into two twice-de-interleaved multiplexed signals;
a single demultiplexing device (80) for demultiplexing said twice-de-interleaved multiplexed signals into single-channel output signals.

6. The demultiplexer system (50) recited in claim 5 wherein the single demultiplexing device (80) is an Offner spectrograph.

7. A multiplexer system comprising:
a single multiplexing device for multiplexing a first set of single-channel signals into a first multiplexed signal and a second set of singled-channel signals into a second multiplexed signal; and
an interleaver for combining said first multiplexed signal and said second multiplexed signal into a third multiplexed signal.

8. The multiplexer system recited in claim 7 wherein the single multiplexing device is an Offner spectrograph.
